# EUROPEAN PATENT SPECIFICATION

(11) **EP 2 117 263 B1**
(45) Date of publication and mention of the grant of the patent: **16.02.2011**
(21) Application number: 09159757.5
(22) Date of filing: 08.05.2009
(51) Int. Cl.: H04W 48/20, H04W 4/22, H04W 76/02

(54) **Method, wireless telecommunications device and computer program for handling emergency calls initiated by a wireless telecommunications device being in out of service state**
Verfahren, drahtloses Telekommunikationsgerät und Computerprogramm zur Behandlung von Notrufen, die von einem drahtlosen Telekommunikationsgerät im "Out-of-Service"-Zustand initiiert wurden
Procédé, dispositif de télécommunications sans fil et programme d'ordinateur pour traiter des appels d'urgence initiée par un dispositif de télécommunications sans fil opérant dans une condition "out of service"

(30) Priority: 09.05.2008 US 52140 P
(43) Date of publication of application: 11.11.2009
(73) Proprietor: RESEARCH IN MOTION LIMITED, Waterloo, Ontario N2L 3W8 (CA)
(72) Inventor: Saini, Sukhdev, Birmingham, West Midlands B1 2RA (GB); Roberts, Gideon Edmund, Birmingham, West Midlands B1 2RA (GB); Gibbs, Fraser, Waterloo, Ontario N2L 3W8 (CA)
(74) Representative: Hibbert, Juliet Jane Grace

(56) References cited:
- GB-A- 2 416 960
- US-A1- 2006 094 397
- US-A1- 2008 102 784
- "Universal Mobile Telecommunications System (UMTS); User Equipment (UE) procedures in idle mode and procedures for cell reselection in connected mode (3GPP TS 25.304 version 7.5.0 Release 7); ETSI TS 125 304" ETSI STANDARDS, LIS, SOPHIA ANTIPOLIS CEDEX, FRANCE, vol. 3-R2, no. V7.5.0, 1 April 2008 (2008-04-01), XP014041726 ISSN: 0000-0001

## Description

### TECHNICAL FIELD

This application relates to wireless telecommunications systems in general, having particular application for example in UMTS (Universal Mobile Telecommunications System) in general, and in particular relates to an apparatus and method for handling out of service emergency calls in wireless telecommunications system user equipment.

### BACKGROUND

In a typical cellular radio system, wireless user equipment (UE) communicates via a radio access radio network (RAN) to one or more core networks. User equipment (UE) comprises various types of equipment such as mobile telephones (also known as cellular or cell phones), lap tops with wireless communication capability, personal digital assistants (PDAs) etc. These may be portable, hand held, pocket sized, installed in a vehicle etc and communicate voice and/or data signals with the radio access network.

In the following, reference will be made to UMTS and to particular standards. However it should be understood that the disclosure is not intended to be limited to any particular mobile telecommunications system.

The radio access network covers a geographical area divided into a plurality of cell areas. Each cell area is served by at least one base station, which in UMTS may be referred to as a Node B. Each cell is identified by a unique identifier which is broadcast in the cell. The base stations communicate at radio frequencies over an air interface with the UEs within range of the base station. Several base stations may be connected to a radio network controller (RNC) which controls various activities of the base stations. The radio network controllers are typically connected to a core network.

UMTS is a third generation public land mobile telecommunication system. Various standardization bodies are known to publish and set standards for UMTS, each in their respective areas of competence. For instance, the 3GPP (Third Generation Partnership Project) has been known to publish and set standards for GSM (Global System for Mobile Communications) based UMTS, and the 3GPP2 (Third Generation Partnership Project 2) has been known to publish and set standards for CDMA (Code Division Multiple Access) based UMTS. Within the scope of a particular standardization body, specific partners publish and set standards in their respective areas.
US Patent application no. 2008/0102784 and GB Patent application no. 2416960 describe techniques for handling emergency calls when an attempt to establish an emergency call fails.

### BRIEF DESCRIPTION OF THE DRAWINGS

Embodiments will now be described, by way of example only, with reference to the attached drawings, in which:

Figure 1 shows an overview of a network and a user equipment device;

Figure 2 is a block diagram illustrating an embodiment of a protocol stack apparatus provided with a RRC block;

Figure 3 is a flow diagram illustrating an embodiment of the method when the UE is in idle mode;

Figure 4 is a flow diagram illustrating an embodiment of the method when the UE is in connected mode;

Figure 5 is a block diagram illustrating a wireless device, which can act as a UE and implement the apparatus and methods of Figures 1 to 4.

The same reference numerals are used in different figures to denote similar elements.

### DETAILED DESCRIPTION OF THE DRAWINGS

Consider a wireless mobile device, generally referred to as user equipment (UE), that complies with the 3GPP specifications for the UMTS protocol. The 3GPP 25.331 specification, v.5.19.0, referred to herein as the 25.331 specification, addresses the subject of UMTS RRC (Radio Resource Control) protocol requirements between the UMTS Terrestrial Radio Access Network (UTRAN) and the UE. The 3GPP 25.304 specification, v.5.9.0, referred to herein as the 25.304 specification, addresses the subject of User Equipment (UE) procedures in idle mode and procedures for cell reselection in connected mode. The 3GPP 24.008 specification, v.3.20.0, referred to herein as the 24.008 specification, addresses the subject of Mobile radio interface Layer 3 specification; Core network protocols. The 3GPP TS 23.122 specification, referred to herein as the 23.122 specification, addresses the subject of Non-Access-Stratum (NAS) functions related to Mobile Station (MS) in idle mode. The 3GPP TS 25.133 specification, referred to herein as the 25.133 specification, addresses the subject of requirements for support of radio resource management (FDD). Section 4.2.2.1 relates to measurement and evaluation of cell selection criteria of a serving cell.

In accordance with clause 7.2.2.2 of the 25.331 specification, if the UE is in the CELL_FACH state and the UE is "out of service area", the UE shall perform the following actions: perform periodic cell selection process; run timers T305 (periodical cell update), and T317 (cell update when re-entering "in service") or T307 (transition to Idle mode), if started; run timers T314 and/or T315, if started.

If the cell selection process fails to find a suitable cell after a complete scan of all RATs and all frequency bands supported by the UE then, after a minimum of TimerOutOfService time (default value 30 seconds) of being "out of service area", the UE shall perform the following actions: indicate all available Public Land Mobile Networks (PLMNs) to the NAS to enable the selection of a new PLMN. If the NAS indicates the selection of a new PLMN the UE shall store information for the new PLMN within the variable SELECTED_PLMN and perform actions according to subclause 8.5.24; if an acceptable cell is found then the UE shall camp on that cell to obtain limited service as defined in 3GPP TS 25.304: "UE Procedures in Idle Mode and Procedures for Cell Reselection in Connected Mode" (referred to herein as the 25.304 specification) and perform actions according to subclause 8.5.24 of the 25.331 specification. If the RRC connection is released due to camping on an acceptable cell, indicate this to upper layers. If no acceptable cell is found, the UE shall continue looking for an acceptable cell as defined in the 25.304 specification.

The definition of "acceptable cell" and "suitable cell" may be found in sections 3 and 4.3 of the 25.304 specification. An acceptable cell is a cell on which the UE may camp to obtain limited service (originate emergency calls) and which satisfies certain conditions as specified in 4.3 of the 25.304 specification. According to the 25.304 specification, a UE can attempt emergency calls on an acceptable cell unless restricted by an access class barred list. A suitable cell is a cell on which a UE may camp to obtain normal service and which satisfies the criteria defined in subclause 4.3 of the 25.304 specification, including the cell being part of the selected PLMN (Public Land Mobile Network) or of a PLMN considered as equivalent by the UE according to the information provided by the NAS. When an emergency call is being placed, this process may be too time-consuming. There are thus proposed strategies for handling out of service emergency calls. A number of such strategies are detailed herein.

Other aspects and features of the proposed strategy will become apparent to those ordinarily skilled in the art upon review of the following description of specific embodiments of an apparatus and method for handling out of service emergency calls in wireless telecommunications system user equipment.

An apparatus and method for handling out of service emergency calls in wireless telecommunications system user equipment is described. In the following description, for the purposes of explanation, numerous specific details are set forth in order to provide a thorough understanding of the present disclosure. It will be apparent, however, to one skilled in the art that the technique may be practised without these specific details. In other instances, well-known structures and devices are shown in block diagram form in order to avoid unnecessarily obscuring the present disclosure.

The needs identified herein, and other needs and objects that will become apparent from the following description, are achieved by, in one aspect, a method for handling out of service emergency calls in wireless telecommunications system according to the subject-matter of independent Claim 1. In other aspects, the disclosure encompasses a wireless telecommunications device and a computer program configured to carry out the foregoing actions according to the subject-matter of independent Claims 7 and 13. In particular, the method may be implemented in a wireless telecommunications device, with or without voice capabilities, or other electronic devices such as handheld or portable devices.

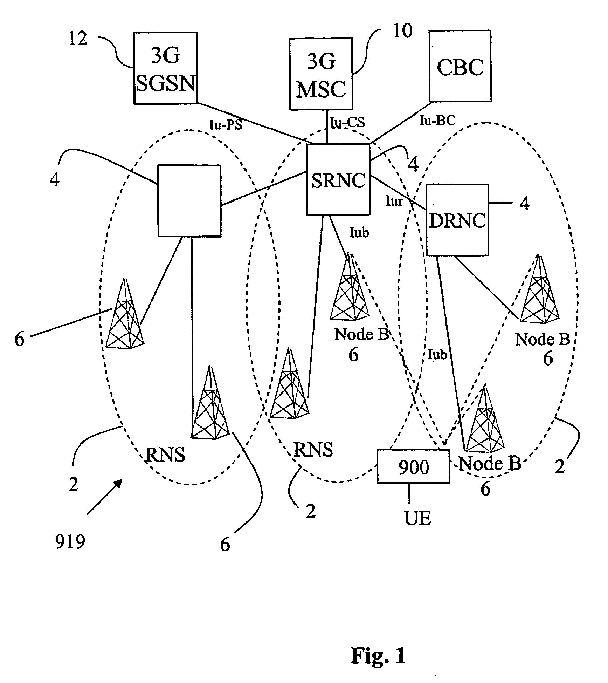

Referring to the drawings, Fig. 1 shows an overview of a network and a UE device. Clearly in practice there may be many UE devices operating with the network but, for the sake of simplicity, Fig. 1 only shows a single UE device 900. For the purposes of illustration, Fig. 1 also shows a network 919 having a few components. It will be clear to a person skilled in the art that in practice a network will include far more components than those shown.

Fig. 1 shows an overview of the radio access network 919 (UTRAN) used in a UMTS system. The network 919 as shown in Fig. 1 comprises three Radio Network Subsystems (RNS) 2. Each RNS has a Radio Network Controller (RNC) 4. Each RNS 2 has one or more Node B 6 which are similar in function to a Base Transmitter Station of a GSM radio access network. User Equipment UE 900 may be mobile within the radio access network. Radio connections (indicated by the straight dotted lines in Fig. 1) are established between the UE and one or more of the Node Bs in the UTRAN.

The radio network controller controls the use and reliability of the radio resources within the RNS 2. Each RNC may also connected to a 3G mobile switching centre 10 (3G MSC) and a 3G serving GPRS support node 12 (3G SGSN).

An RNC 4 controls one or more Node B's. An RNC plus its Node B's together make up an RNS 2. A Node B controls one or more cells. Each cell is uniquely identified by a frequency and a primary scrambling code (primary CPICH in FDD, primary CCPCH in TDD).

Generally in UMTS a cell refers to a radio network object that can be uniquely identified by a UE from a cell identifier that is broadcast over geographical areas from a UTRAN access point. A UTRAN access point is a conceptual point within the UTRAN performing radio transmission and reception. A UTRAN access point is associated with one specific cell i.e., there exists one UTRAN access point for each cell. It is the UTRAN-side end point of a radio link. A single physical Node B 6 may operate as more than one cell since it may operate at multiple frequencies and/or with multiple scrambling codes.

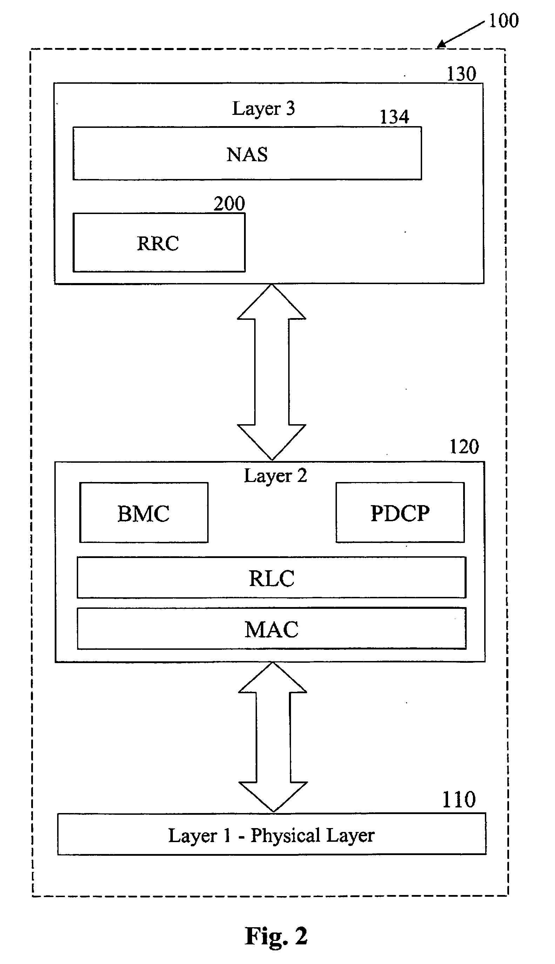

Figure 2 is a block diagram illustrating an embodiment of a protocol stack 100 provided in a UE. A Radio Resource Controller (RRC) block 200 is a sub layer of Layer 3 130 of a UMTS protocol stack 100. The RRC 200 exists in the control plane only and provides an information transfer service to the non-access stratum NAS 134. The RRC 200 is responsible for controlling the configuration of radio interface Layer 1 110 and Layer 2 120. When the UTRAN wishes to change the UE configuration it will issue a message to the UE containing a command to invoke a specific RRC procedure. The RRC 200 layer of the UE decodes this message and initiates the appropriate RRC procedure. Generally when the procedure has been completed (either successfully or not) then the RRC sends a response message to the UTRAN (via the lower layers) informing the OUTRAN of the outcome. It should be noted that there are a few scenarios where the RRC will not issue a response message to the OUTRAN and, in those cases the RRC need not and does not reply.

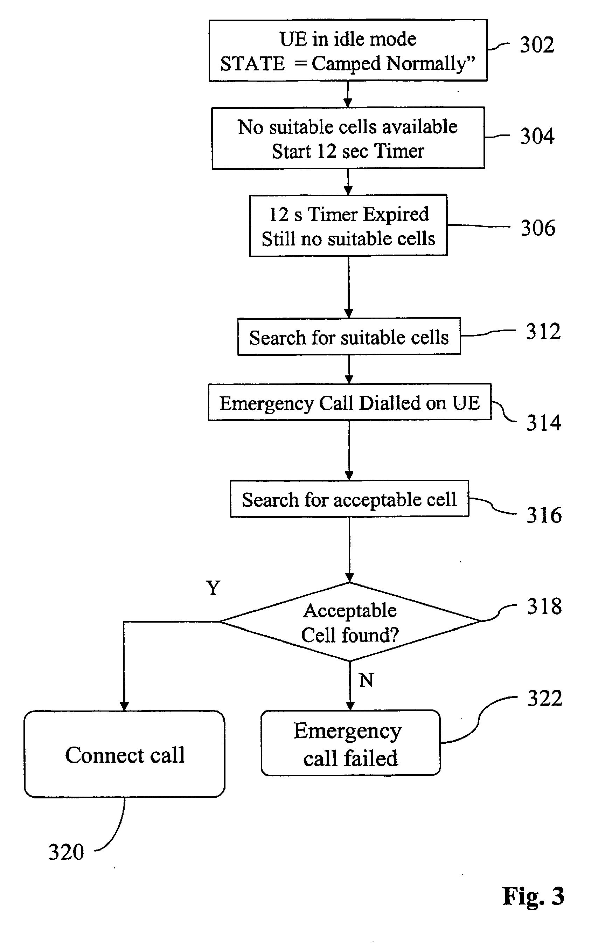

Figure 3 illustrates a method for handling out of service emergency calls in wireless telecommunications system user equipment. Initially the UE is in idle mode and is in the state "Camped normally" (302). The UE carries out routine measurement and evaluation of cell selection criteria for a serving cell. If no suitable cells are available (304), a timer T2 is started (304). Say the default setting for T2 is 12s. During the period set by the timer T2, the UE undertakes measurement and evaluation of cell selection criteria of all neighbour cells indicated in the measurement control system information of the UE, regardless of the measurement rules currently limiting UE measurement activities. If no suitable cell is found by the expiry of T2 (306), then the device is said to be "out of service area" and an expanded search for suitable cells is initiated (312) in which the UE searches for a cell in every frequency of the frequency band of the telecommunications system (e.g. the UMTS frequency band). If an emergency call is initiated by the UE (314) whilst the UE is in an out of service area, the UE in response initiates a search for an acceptable cell (316) rather than continuing with the search for suitable cells. The UE checks whether an acceptable cell is found (318). If an acceptable cell is found then the emergency call is connected (320). If an acceptable cell is not found then the emergency call fails (322).

The method as described and illustrated therefore means that the UE does not wait for the completion of the expanded search (312) before beginning the search for an acceptable cell (316). Instead, when the UE is in an out of service area, the UE initiates the search for an acceptable cell in response to the initiating of an emergency call on the UE. The emergency call is therefore established without waiting for completion of the full scan for a cell in every frequency of the frequency band of the telecommunications system (e.g. the UMTS frequency band). The UE is therefore able to establish the emergency call in a faster manner as the search for an acceptable cell is started before the full scan is completed.

Thus, in response to detection of an emergency call being initiated by the user device when the device is in a out of service area, the method comprises initiating a search for an acceptable cell on which the user device may camp to obtain limited service and when an acceptable cell is found establishing the emergency call.

Initiating a search for an acceptable cell may comprise changing a search criteria for the user device to any mobile network rather than a registered network. For example, the search for a registered mobile network may be a search for a registered Public Land Mobile Network (RPLMN) and the search for any mobile network may be a search for any Public Land Mobile Network (PLMN). In one embodiment, initiating a search for an acceptable cell comprises a Non-Access Stratum of the user device changing a search criteria of the user device, for instance from the RPLMN to any PLMN. In response to this change in search criteria, the UE immediately camps on the first available cell and performs cell reselection.

In response to detection of an emergency call being initiated by the user device, the user device may halt or terminate a previously ongoing search for a suitable cell on which a UE may camp to obtain normal service.

Examples of emergency calls are calls to the emergency services e.g. Police, Ambulance, Fire Brigade, Marine Guard, Mountain Rescue. These may be initiated by a user dialling a particular number on the UE e.g. 911 in the United States of America, 999 in the United Kingdom, 112 in the European Union etc. In other cases, the UE may be capable of initiating an emergency call automatically in response to external events (for example, a car crash). Typically, the UE is informed of emergency numbers by the network. In UMTS, the Call Control entity in NAS uses the message Emergency Setup as described in section 9.3.8 of the 24.008 specification. The NAS informs the UAS (RRC layer) by setting the Information Element (IE) "Emergency Call IE" in message RRC_SC_Establish_req.

The device may be considered to be in an out of service area when the device is unable to camp on a suitable cell at stage 304 or 306. The device is out of service with the network.

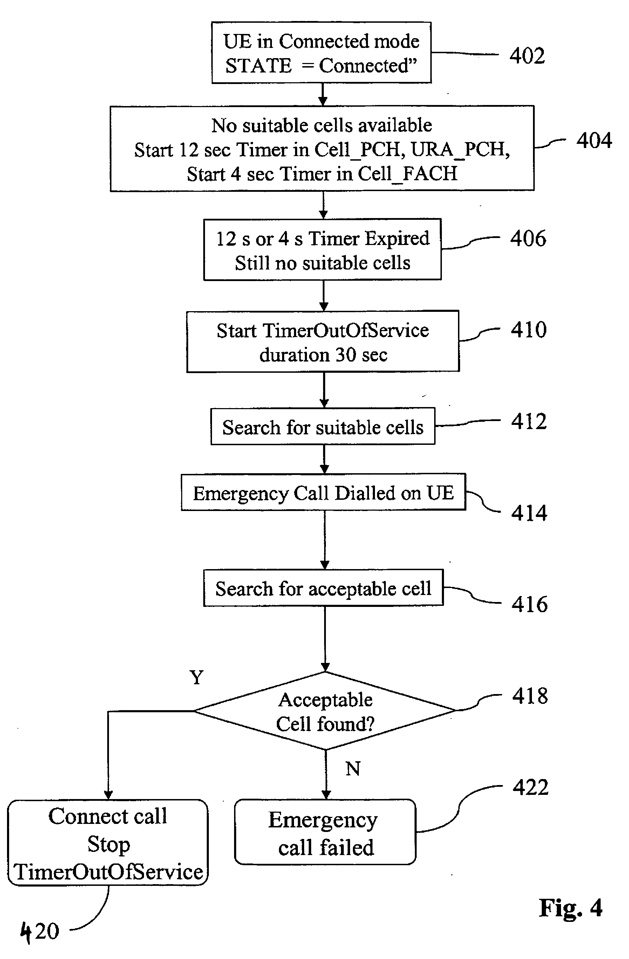

Figure 4 illustrates a method for handling out of service emergency calls in wireless telecommunications system user equipment when the UE is in connected mode. Initially the UE is in connected mode and is in the state "Connected" (402). The UE carries out routine measurement and evaluation of cell selection criteria for a serving cell. If no suitable cells are available (404), a timer T2 is started (404). According to the 25.331 specification, if the UE is in Cell_PCH or URA_PCH then the default setting for T2 is 12s and if the UE is in Cell-FACH the default setting for T2 is 4s. During the period set by the timer T2, the UE undertakes measurement and evaluation of cell selection criteria of all neighbour cells indicated in the measurement control system information of the UE, regardless of the measurement rules currently limiting UE measurement activities. If no suitable cell is found by the expiry of T2 (406), then the device is said to be "out of service area" and the timer TimerOutofService is started (410) (with say a default value of 30s) and a search for suitable cells is initiated (412). During this search the UE searches for a cell in every frequency of the frequency band of the telecommunications system. If an emergency call is initiated by the UE (414) whilst the UE is in an out of service area, the UE in response initiates a search for an acceptable cell (416) rather than continuing with the search for suitable cells. The UE checks whether an acceptable cell is found (418). If an acceptable cell is found then the emergency call is connected and the timer TimerOutofService is stopped (420). If an acceptable cell is not found then the emergency call fails (422).

The method as described and illustrated therefore means that the UE does not wait for the expiry of the timer TimerOutofService before beginning the search for an acceptable cell. Instead, the UE initiates the search for an acceptable cell in response to the initiating of an emergency call on the UE when the UE is in an out of service area.

Thus, in response to detection of an emergency call being initiated by the user device when the device is in a out of service area, the method comprises initiating a search for an acceptable cell on which the user device may camp to obtain limited service and when an acceptable cell is found establishing the emergency call.

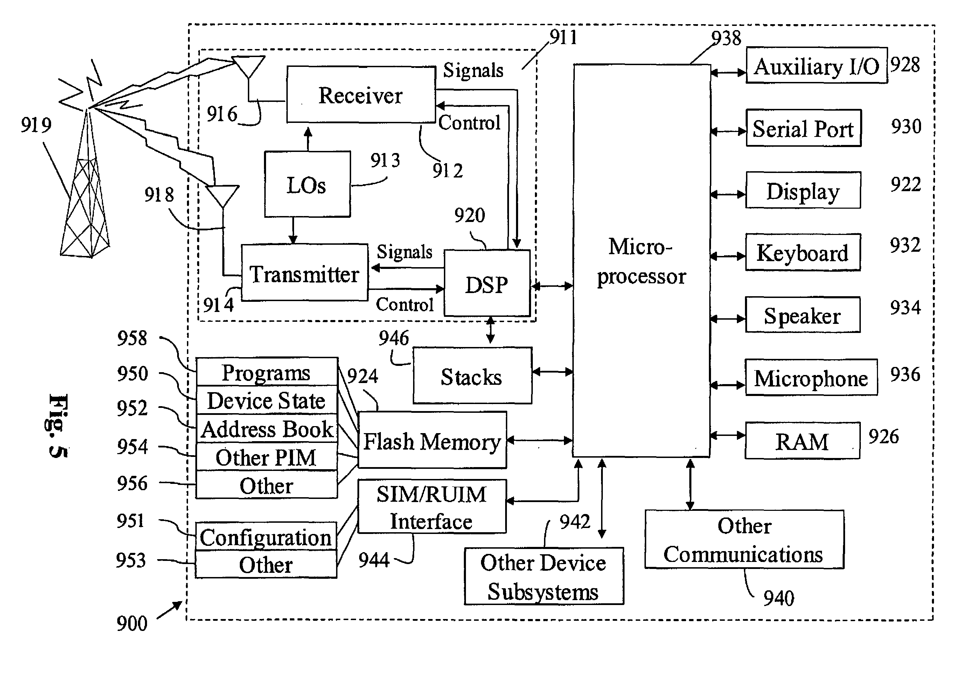

Turning now to Figure 5, Figure 5 is a block diagram illustrating a wireless device, which can act as a UE and co-operate with the apparatus and methods of Figures 1 to 3, and which is an exemplary wireless communication device. Mobile station 900 is preferably a two-way wireless communication device having at least voice and data communication capabilities. Mobile station 900 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 900 is enabled for two-way communication, it will incorporate a communication subsystem 911, including both a receiver 912 and a transmitter 914, as well as associated components such as one or more, preferably embedded or internal, antenna elements 916 and 918, local oscillators (LOs) 913, and a processing module such as a digital signal processor (DSP) 920. As will be apparent to those skilled in the field of communications, the particular design of the communication subsystem 911 will be dependent upon the communication network in which the device is intended to operate. For example, mobile station 900 may include a communication subsystem 911 designed to operate within the Mobitex™ mobile communication system, the DataTAC™ mobile communication system, GPRS network, UMTS network, or EDGE network.

Network access requirements will also vary depending upon the type of network 902. For example, in the Mobitex and DataTAC networks, mobile station 900 is registered on the network using a unique identification number associated with each mobile station. In UMTS and GPRS networks, however, network access is associated with a subscriber or user of mobile station 900. A GPRS mobile station therefore requires a subscriber identity module (SIM) card in order to operate on a GPRS network. Without a valid SIM card, a GPRS mobile station will not be fully functional. Local or non-network communication functions, as well as legally required functions (if any) such as "911" emergency calling, may be available, but mobile station 900 will be unable to carry out any other functions involving communications over the network 902. The SIM interface 944 is normally similar to a card-slot into which a SIM card can be inserted and ejected like a diskette or PCMCIA card. The SIM card can have approximately 64K of memory and hold many key configuration 951, and other information 953 such as identification, and subscriber related information.

When required network registration or activation procedures have been completed, mobile station 900 may send and receive communication signals over the network 902. Signals received by antenna 916 through communication network 902 are input to receiver 912, which may perform such common receiver functions as signal amplification, frequency down conversion, filtering, channel selection and the like, and in the example system shown in Figure 5, analog to digital (A/D) conversion. A/D conversion of a received signal allows more complex communication functions such as demodulation and decoding to be performed in the DSP 920. In a similar manner, signals to be transmitted are processed, including modulation and encoding for example, by DSP 920 and input to transmitter 914 for digital to analog conversion, frequency up conversion, filtering, amplification and transmission over the communication network 902 via antenna 918. DSP 920 not only processes communication signals, but also provides for receiver and transmitter control. For example, the gains applied to communication signals in receiver 912 and transmitter 914 may be adaptively controlled through automatic gain control algorithms implemented in DSP 920.

Mobile station 900 preferably includes a microprocessor 938 which controls the overall operation of the device. Communication functions, including at least data and voice communications, are performed through communication subsystem 911. Microprocessor 938 also interacts with further device subsystems such as the display 922, flash memory 924, random access memory (RAM) 926, auxiliary input/output (I/O) subsystems 928, serial port 930, keyboard 932, speaker 934, microphone 936, a short-range communications subsystem 940 and any other device subsystems generally designated as 942.

Some of the subsystems shown in Figure 5 perform communication-related functions, whereas other subsystems may provide "resident" or on-device functions. Notably, some subsystems, such as keyboard 932 and display 922, for example, may be used for both communication-related functions, such as entering a text message for transmission over a communication network, and device-resident functions such as a calculator or task list.

Operating system software used by the microprocessor 938 is preferably stored in a persistent store such as flash memory 924, which may instead be a read-only memory (ROM) or similar storage element (not shown). Those skilled in the art will appreciate that the operating system, specific device applications, or parts thereof, may be temporarily loaded into a volatile memory such as RAM 926. Received communication signals may also be stored in RAM 926.

As shown, flash memory 924 can be segregated into different areas for both computer programs 958 and program data storage 950, 952, 954 and 956. These different storage types indicate that each program can allocate a portion of flash memory 924 for their own data storage requirements. Microprocessor 938, in addition to its operating system functions, preferably enables execution of software applications on the mobile station. A predetermined set of applications that control basic operations, including at least data and voice communication applications for example, will normally be installed on mobile station 900 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 902. In a preferred embodiment, the PIM data items are seamlessly integrated, synchronized and updated, via the wireless network 902, with the mobile station user's corresponding data items stored or associated with a host computer system. Further applications may also be loaded onto the mobile station 900 through the network 902, an auxiliary I/O subsystem 928, serial port 930, short-range communications subsystem 940 or any other suitable subsystem 942, and installed by a user in the RAM 926 or preferably a nonvolatile store (not shown) for execution by the microprocessor 938. Such flexibility in application installation increases the functionality of the device and may provide enhanced on-device functions, communication-related functions, or both. For example, secure communication applications may enable electronic commerce functions and other such financial transactions to be performed using the mobile station 900.

In a data communication mode, a received signal such as a text message or web page download will be processed by the communication subsystem 911 and input to the microprocessor 938, which preferably further processes the received signal for output to the display 922, or alternatively to an auxiliary I/O device 928. A user of mobile station 900 may also compose data items such as email messages for example, using the keyboard 932, which is preferably a complete alphanumeric keyboard or telephone-type keypad, in conjunction with the display 922 and possibly an auxiliary I/O device 928. Such composed items may then be transmitted over a communication network through the communication subsystem 911.

For voice communications, overall operation of mobile station 900 is similar, except that received signals would preferably be output to a speaker 934 and signals for transmission would be generated by a microphone 936. Alternative voice or audio I/O subsystems, such as a voice message recording subsystem, may also be implemented on mobile station 900. Although voice or audio signal output is preferably accomplished primarily through the speaker 934, display 922 may also be used to provide an indication of the identity of a calling party, the duration of a voice call, or other voice call related information for example.

Serial port 930 in Figure 5, would normally be implemented in a personal digital assistant (PDA)-type mobile station for which synchronization with a user's desktop computer (not shown) may be desirable, but is an optional device component. Such a port 930 would enable a user to set preferences through an external device or software application and would extend the capabilities of mobile station 900 by providing for information or software downloads to mobile station 900 other than through a wireless communication network. The alternate download path may for example be used to load an encryption key onto the device through a direct and thus reliable and trusted connection to thereby enable secure device communication.

Other communications subsystems 940, such as a short-range communications subsystem, is a further optional component which may provide for communication between mobile station 900 and different systems or devices, which need not necessarily be similar devices. For example, the subsystem 940 may include an infrared device and associated circuits and components or a Bluetooth™ communication module to provide for communication with similarly enabled systems and devices.

When mobile device 900 is used as a UE, protocol stacks 946 include an apparatus and method for handling out of service emergency calls in mobile telecommunications system user equipment.

### EXTENSIONS AND ALTERNATIVES

In the foregoing specification, the disclosure has been described with reference to specific embodiments thereof. It will, however, be evident that various modifications and changes may be made thereto without departing from the scope of the technique. The specification and drawings are, accordingly, to be regarded in an illustrative rather than a restrictive sense.

It is to be noted that the methods as described have actions being carried out in a particular order. However, it would be clear to a person skilled in the art that the order of any actions performed, where the context permits, can be varied and thus the ordering as described herein is not intended to be limiting.

It is also to be noted that where a method has been described it is also intended that protection is also sought for a device arranged to carry out the method and where features have been claimed independently of each other these may be used together with other claimed features.

Furthermore it will be noted that the apparatus described herein may comprise a single component such as a UE or UTRAN or other user equipment or access network components, a combination of multiple such components for example in communication with one another or a sub-network or full network of such components.

Embodiments have been described herein in relation to 3GPP specifications. However the method and apparatus described are not intended to be limited to the specifications or the versions thereof referred to herein but may be applicable to future versions or other specifications.

## Claims

1. A method for handling out of service emergency calls in a wireless telecommunications system, the system comprising a network (919) of a plurality of cells and at least one wireless telecommunications device (900), the method comprising, in the wireless telecommunications device (900).
when the device (900) is out of service with the network (919) and searching for a suitable cell (312, 412) on which the device may camp to obtain normal service, detecting initiation of an emergency call (314, 414); and
in response to detection of an emergency call being initiated by the device when the device is out of service with the network, halting the search for a suitable cell and initiating a search for an acceptable cell (316, 416) on which the device may camp to obtain limited service and when an acceptable cell is found (318, 418) establishing the emergency call (320, 420).

2. A method according to claim 1 further wherein initiating a search for an acceptable cell comprises changing a search criteria for the device to any mobile network rather than a registered mobile network.

3. A method according to claim 2 wherein the search for a registered mobile network is a search for a registered Public Land Mobile Network "RPLMN" and the search for any mobile network is a search for any Public Land Mobile Network "PLMN".

4. A method according to any preceding claim wherein initiating a search for an acceptable cell comprises a Non-Access Stratum layer of the user device changing a search criteria of the device.

5. A method according to any preceding claim wherein the device is operable according to the Universal Mobile Telecommunications System.

6. A method according to any preceding claim further comprising, in response to detection of an emergency call being initiated by the device when the device is out of service with the network, terminating a search for a suitable cell before initiating the search for an acceptable cell.

7. A wireless telecommunications device (900) arranged to detect initiation of an emergency call when the device is out of service with a telecommunications network (919) and searching for a suitable cell (312, 412) on which the device may camp to obtain normal service and, in response to detection of an emergency call being initiated (314, 414) by the device when the device is out of service with the network, arranged to halt the search for a suitable cell and to initiate a search for an acceptable cell (316, 416) on which the device may camp to obtain limited service and when an acceptable cell is found (318, 418) arranged to establish the emergency call (320, 420).

8. A device according to claim 7 wherein initiating a search for an acceptable cell comprises changing a search criteria for the device to any mobile network rather than a registered mobile network.

9. A device according to claim 8 wherein the search for a registered mobile network is a search for a registered Public Land Mobile Network "RPLMN" and the search for any mobile network is a search for any Public Land Mobile Network "PLMN".

10. A device according to any of claims 7 to 9 wherein initiating a search for an acceptable cell comprises a Non-Access Stratum of the user device changing a search criteria of the device.

11. A device according to any of claims 7 to 10 wherein the device is operable according to the Universal Mobile Telecommunications System.

12. A device according to any of claims 7 to 11 further comprising, in response to detection of an emergency call being initiated by the device when the device is out of service with the network, terminating a search for a suitable cell before initiating the search for an acceptable cell.

13. A computer program comprising program code for use in a wireless telecommunications device (900), the computer program causing when executed on a computer the wireless communications devices (900) to:
detect initiation of an emergency call when the device is out of service with a telecommunications network and searching for a suitable cell (312, 412) on which the device may camp to obtain normal service; and
in response to detection of an emergency call being initiated (314, 414) by the device when the device is out of service with the network, halt the search for a suitable cell and initiate a search for an acceptable cell (316, 416) on which the device may camp to obtain limited service and when an acceptable cell is found (318, 418) establishing the emergency call (320, 420).

14. A computer program according to claim 13, the computer program further causing the wireless communications apparatus to initiating a search for an acceptable cell by changing a search criteria for the device to any mobile network rather than a registered mobile network.

15. A computer program according to claim 14, the computer program further causing the wireless communications apparatus to search for a registered Public Land Mobile Network "RPLMN" and to search for any Public Land Mobile Network "PLMN".

16. A computer program according to any of claims 13 to 15, the computer program further causing the wireless communications apparatus to initiate a search for an acceptable cell by a Non-Access Stratum of the user device changing a search criteria of the device.

17. A computer program according to any of claims 13 to 16 wherein the device is operable according to the Universal Mobile Telecommunications System.

18. A computer program according to any of claims 13 to 17, the computer program further causing the wireless communications apparatus, in response to detection of an emergency call being initiated by the device when the device is out of service with the network, to terminate a search for a suitable cell before initiating the search for an acceptable cell.

## Patentansprüche

1. Verfahren zum Handhaben von außer-Dienst-Notrufen in einem drahtlosen Telekommunikationssystem, wobei das System ein Netzwerk (919) mit einer Vielzahl von Zellen und zumindest einer drahtlosen Telekommunikationsvorrichtung (900) aufweist, wobei das Verfahren in der drahtlosen Telekommunikationsvorrichtung (900) aufweist:
wenn die Vorrichtung (900) außer Dienst mit dem Netzwerk (919) ist und nach einer geeigneten Zelle (312, 412) sucht, die die Vorrichtung verwenden kann, um einen normalen Dienst zu erlangen, Erfassen einer Initiierung eines Notrufs (314, 414); und
in Reaktion auf eine Erfassung einer Initiierung eines Notrufs durch die Vorrichtung, wenn die Vorrichtung außer Dienst mit dem Netzwerk ist, Anhalten der Suche nach einer geeigneten Zelle und Initiieren einer Suche nach einer akzeptablen Zelle (316, 416), die die Vorrichtung verwenden kann, um beschränkten Dienst zu erlangen, und wenn eine akzeptable Zelle gefunden ist (318, 418), Herstellen des Notrufs.

2. Verfahren gemäß Anspruch 1, wobei weiter ein Initiieren einer Suche nach einer akzeptablen Zelle ein Ändern eines Suchkriteriums für die Vorrichtung auf jedes mobile Netzwerk anstatt eines registrierten mobilen Netzwerks aufweist.

3. Verfahren gemäß Anspruch 2, wobei die Suche nach einem registrierten mobilen Netzwerk eine Suche nach einem registrierten RPLMN (registered Public Land Mobile Network) ist und die Suche nach einem mobilen Netzwerk eine Suche nach einem PLMN (Public Land Mobile Network) ist.

4. Verfahren gemäß einem vorhergehenden Anspruch, wobei ein Initiieren einer Suche nach einer akzeptablen Zelle aufweist, dass eine Nichtzugriffsschicht(Non-Access-Stratum)-Schicht der Benutzervorrichtung ein Suchkriterium der Vorrichtung ändert.

5. Verfahren gemäß einem vorhergehenden Anspruch, wobei die Vorrichtung gemäß UMTS (Universal Mobile Telecommunications System) betriebsfähig ist.

6. Verfahren gemäß einem vorhergehenden Anspruch, das weiter aufweist, in Reaktion auf eine Erfassung, dass ein Notruf durch die Vorrichtung initiiert wird, wenn die Vorrichtung außer Dienst mit dem Netzwerk ist, Beenden einer Suche nach einer geeigneten Zelle vor einem Initiieren der Suche nach einer akzeptablen Zelle.

7. Drahtlose Telekommunikationsvorrichtung (900), die ausgebildet ist zum Erfassen einer Initiierung eines Notrufs, wenn die Vorrichtung außer Dienst mit einem Telekommunikationsnetzwerk (919) ist und nach einer geeigneten Zelle (312, 412) sucht, die die Vorrichtung verwenden kann, um einen normalen Dienst zu erlangen, und, in Reaktion auf eine Erfassung einer Initiierung (314, 414) eines Notrufs durch die Vorrichtung, wenn die Vorrichtung außer Dienst mit dem Netzwerk ist, ausgebildet ist zum Anhalten der Suche nach einer geeigneten Zelle und Initiieren einer Suche nach einer akzeptablen Zelle (316, 416), die die Vorrichtung verwenden kann, um beschränkten Dienst zu erlangen, und, wenn eine akzeptable Zelle gefunden ist (318, 418), ausgebildet ist zum Herstellen des Notrufs (320, 420).

8. Vorrichtung gemäß Anspruch 7, wobei ein Initiieren einer Suche nach einer akzeptablen Zelle ein Ändern eines Suchkriteriums für die Vorrichtung auf jedes mobile Netzwerk anstatt eines registrierten mobilen Netzwerks aufweist.

9. Vorrichtung gemäß Anspruch 8, wobei die Suche nach einem registrierten mobilen Netzwerk eine Suche nach einem registrierten RPLMN (registered Public Land Mobile Network) ist und die Suche nach einem mobilen Netzwerk eine Suche nach einem PLMN (Public Land Mobile Network) ist.

10. Vorrichtung gemäß einem der Ansprüche 7 bis 9, wobei ein Initiieren einer Suche nach einer akzeptablen Zelle aufweist, dass eine Non-Access-Stratum der Benutzervorrichtung ein Suchkriterium der Vorrichtung ändert.

11. Vorrichtung gemäß einem der Ansprüche 7 bis 10, wobei die Vorrichtung gemäß UMTS (Universal Mobile Telecommunications System) betriebsfähig ist.

12. Vorrichtung gemäß einem der Ansprüche 7 bis 11, die weiter aufweist, in Reaktion auf eine Erfassung, dass ein Notruf durch die Vorrichtung initiiert wird, wenn die Vorrichtung außer Dienst mit dem Netzwerk ist, Beenden einer Suche nach einer geeigneten Zelle vor einem Initiieren der Suche nach einer akzeptablen Zelle.

13. Computerprogramm, das Programmcode aufweist zur Verwendung in einer drahtlosen Telekommunikationsvorrichtung (900), wobei das Computerprogramm bei Ausführung auf einem Computer die drahtlose Kommunikationsvorrichtung (900) veranlasst zum:
Erfassen einer Initiierung eines Notrufs, wenn die Vorrichtung mit einem Telekommunikationsnetzwerk außer Dienst ist und nach einer geeigneten Zelle (312, 412) sucht, die die Vorrichtung verwenden kann, um einen normalen Dienst zu erlangen; und,
in Reaktion auf eine Erfassung einer Initiierung (314, 414) eines Notrufs durch die Vorrichtung, wenn die Vorrichtung außer Dienst mit dem Netzwerk ist, Anhalten der Suche nach einer geeigneten Zelle und Initiieren einer Suche nach einer akzeptablen Zelle (316, 416), die die Vorrichtung verwenden kann, um beschränkten Dienst zu erlangen, und, wenn eine akzeptable Zelle gefunden ist (318, 418), Herstellen des Notrufs (320, 420).

14. Computerprogramm gemäß Anspruch 13, wobei das Computerprogramm weiter die drahtlose Kommunikationsvorrichtung veranlasst zum Initiieren einer Suche nach einer akzeptablen Zelle durch Ändern eines Suchkriteriums für die Vorrichtung auf jedes mobile Netzwerk anstatt eines registrierten mobilen Netzwerks.

15. Computerprogramm gemäß Anspruch 14, wobei das Computerprogramm weiter die drahtlose Kommunikationsvorrichtung veranlasst zum Suchen nach einem registrierten RPLMN (registered Public Land Mobile Network) und zum Suchen nach einem PLMN (Public Land Mobile Network).

16. Computerprogramm gemäß einem der Ansprüche 13 bis 15, wobei das Computerprogramm weiter die drahtlose Kommunikationsvorrichtung veranlasst zum Initiieren einer Suche nach einer akzeptablen Zelle **dadurch**, dass eine Non-Access-Stratum der Benutzervorrichtung ein Suchkriterium der Vorrichtung ändert.

17. Computerprogramm gemäß einem der Ansprüche 13 bis 16, wobei die Vorrichtung gemäß UMTS (Universal Mobile Telecommunications System) betriebsfähig ist.

18. Computerprogramm gemäß einem der Ansprüche 13 bis 17, wobei das Computerprogramm weiter die drahtlose Kommunikationsvorrichtung veranlasst, in Reaktion auf eine Erfassung, dass ein Notruf durch die Vorrichtung initiiert wird, wenn die Vorrichtung außer Dienst mit dem Netzwerk ist, zum Beenden einer Suche nach einer geeigneten Zelle vor einem Initiieren der Suche nach einer akzeptablen Zelle.

## Revendications

1. Procédé de gestion d'appels d'urgence hors desserte, dans un système de télécommunications sans fil, le système comprenant un réseau (919) composé d'une pluralité de cellules et au moins un dispositif de télécommunications sans fil (900), le procédé comprenant, sur le dispositif de télécommunications sans fil (900), les étapes consistant à :
lorsque le dispositif (900) n'est pas desservi par le réseau (919) et recherche une cellule adéquate (312, 412) sur laquelle le dispositif peut s'inscrire pour obtenir une desserte normale, détecter le lancement d'un appel d'urgence (314, 414) ; et
en réponse à la détection du lancement d'un appel d'urgence par le dispositif alors que le dispositif n'est pas desservi par le réseau, interrompre la recherche d'une cellule adéquate et lancer une recherche d'une cellule acceptable (316, 416) sur laquelle le dispositif peut s'inscrire pour obtenir une desserte limitée et, lorsqu'une cellule acceptable est trouvée (318, 418), établir l'appel d'urgence (320, 420).

2. Procédé selon la revendication 1, dans lequel, en outre, l'étape de lancement d'une recherche d'une cellule acceptable comprend l'étape consistant à changer un critère de recherche du dispositif, en direction d'un réseau mobile quelconque plutôt qu'un réseau mobile enregistré.

3. Procédé selon la revendication 2, dans lequel la recherche d'un réseau mobile enregistré est une recherche d'un réseau mobile public terrestre enregistré "RPLMN" et la recherche d'un réseau mobile quelconque est une recherche d'un réseau mobile public terrestre quelconque "PLMN".

4. Procédé selon l'une quelconque des revendications précédentes, dans lequel l'étape de lancement d'une recherche d'une cellule acceptable comprend l'étape consistant à modifier un critère de recherche du dispositif par une couche avec strate ne concernant pas l'accès.

5. Procédé selon l'une quelconque des revendications précédentes, dans lequel le dispositif fonctionne selon la norme UMTS, pour *« Universal Mobile Telecommunications System* ».

6. Procédé selon l'une quelconque des revendications précédentes, comprenant en outre, en réponse à la détection du lancement d'un appel d'urgence par le dispositif alors que le dispositif n'est pas desservi par le réseau, l'étape consistant à interrompre une recherche d'une cellule adéquate avant de lancer la recherche d'une cellule acceptable.

7. Dispositif de télécommunications sans fil (900), conçu pour détecter le lancement d'un appel d'urgence alors que le dispositif n'est pas desservi par un réseau de télécommunications (919) et recherche une cellule adéquate (312, 412) sur laquelle le dispositif peut s'inscrire pour obtenir une desserte normale et, en réponse à la détection du lancement d'un appel d'urgence par le dispositif (314, 414) alors que le dispositif n'est pas desservi par le réseau, conçu pour interrompre la recherche d'une cellule adéquate, et pour lancer une recherche d'une cellule acceptable (316, 416) sur laquelle le dispositif peut s'inscrire pour obtenir une desserte limitée et, lorsqu'une cellule acceptable est trouvée (318, 418), pour établir un appel d'urgence (320, 420).

8. Dispositif selon la revendication 7, dans lequel le lancement d'une recherche d'une cellule acceptable comprend la modification d'un critère de recherche du dispositif, afin de trouver un réseau mobile quelconque plutôt qu'un réseau mobile enregistré.

9. Dispositif selon la revendication 8, dans lequel la recherche d'un réseau mobile enregistré est une recherche d'un réseau mobile public terrestre enregistré "RPLMN" et la recherche d'un réseau mobile quelconque est une recherche d'un réseau mobile public terrestre quelconque "PLMN".

10. Dispositif selon l'une quelconque des revendications 7 à 9, dans lequel le lancement d'une recherche d'une cellule acceptable comprend la modification d'un critère de recherche du dispositif par une strate ne concernant pas l'accès.

11. Dispositif selon l'une quelconque des revendications 7 à 10, dans lequel le dispositif fonctionne selon la norme UMTS.

12. Dispositif selon l'une quelconque des revendications 7 à 11, comprenant en outre, en réponse à la détection du lancement d'un appel d'urgence par le dispositif alors que le dispositif n'est pas desservi par le réseau, l'interruption d'une recherche d'une cellule adéquate avant de lancer la recherche d'une cellule acceptable.

13. Programme d'ordinateur comprenant du code de programme destiné à être utilisé dans un dispositif de télécommunications sans fil (900), le programme d'ordinateur, lorsqu'il est exécuté sur un ordinateur, commandant au dispositif de télécommunications sans fil (900) de :
alors que le dispositif n'est pas desservi par un réseau de télécommunications et recherche une cellule adéquate (312, 412) sur laquelle le dispositif peut s'inscrire pour obtenir une desserte normale, détecter le lancement d'un appel d'urgence ; et
en réponse à la détection du lancement d'un appel d'urgence (314, 414) par le dispositif alors que le dispositif est pas desservi par le réseau, interrompre la recherche d'une cellule adéquate et lancer une recherche d'une cellule acceptable (316, 416) sur laquelle le dispositif peut s'inscrire pour obtenir une desserte limitée et, lorsqu'une cellule acceptable est trouvée (318, 418), établir l'appel d'urgence (320, 420).

14. Programme d'ordinateur selon la revendication 13, le programme d'ordinateur commandant en outre à l'appareil de communications sans fil de lancer une recherche d'une cellule acceptable en modifiant un critère de recherche du dispositif, en direction d'un réseau mobile quelconque plutôt qu'un réseau mobile enregistré.

15. Programme d'ordinateur selon la revendication 14, le programme d'ordinateur commandant en outre à l'appareil de communications sans fil de rechercher un réseau mobile public terrestre enregistré "RPLMN" et à rechercher un réseau mobile public terrestre quelconque "PLMN".

16. Programme d'ordinateur selon l'une quelconque des revendications 13 à 15, le programme d'ordinateur commandant en outre à l'appareil de communications sans fil de lancer une recherche d'une cellule acceptable à l'aide d'une strate ne concernant pas l'accès, sur le dispositif utilisateur, en changeant un critère de recherche du dispositif.

17. Programme d'ordinateur selon l'une quelconque des revendications 13 à 16, dans lequel le dispositif fonctionne selon la norme UMTS.

18. Programme d'ordinateur selon l'une quelconque des revendications 13 à 17, le programme d'ordinateur commandant en outre à l'appareil de communications sans fil, en réponse à la détection du lancement d'un appel d'urgence par le dispositif alors que le dispositif n'est pas desservi par le réseau, d'interrompre une recherche de cellule adéquate avant de lancer la recherche d'une cellule acceptable.
